# EUROPÄISCHE PATENTANMELDUNG

(11) **EP 2 095 902 A1**
(43) Veröffentlichungstag der Anmeldung: **02.09.2009**
(21) Anmeldenummer: 09001500.9
(22) Anmeldetag: 04.02.2009
(51) Int. Cl.: B23K 9/10, B23K 9/133, B23K 9/167

(54) **Lichtbogenschweißgerät**

(30) Priorität: 27.02.2008 DE 102008012615
(71) Anmelder: Lorch Schweisstechnik GmbH, 71549 Auenwald (DE)
(72) Erfinder: Dutschmann, Arthur, 71566 Althütte (DE)
(74) Vertreter: Karrais, Martin

(57) **Zusammenfassung**

Die Erfindung betrifft ein Lichtbogenschweißgerät (10) umfassend eine Schweißstromquelle (10), mittels derer ein Lichtbogen (56) zwischen einer nicht abschmelzenden Elektrode (54) und einem Werkstück (34) erzeugbar ist, insbesondere zum WIG- und/oder Plasmaschweißen, und außerdem umfassend ein Vorschubteil (32) zum definierten Zuführen von Schweißzusatzwerkstoff zum Werkstück, wobei dem Vorschubteil eine Vorschubsteuerung zum Steuern des Vorschubteiles zugeordnet ist. Um das Lichtbogenschweißgerät derart weiterzubilden, dass es eine einfachere Handhabung und eine verbesserte Funktionssicherheit aufweist, wird erfindungsgemäß vorgeschlagen, dass die Schweißstromquelle zusammen mit dem Vorschubteil und/oder der Vorschubsteuerung an oder in einem gemeinsamen Tragteil gehalten sind.

## Beschreibung

Die Erfindung betrifft ein Lichtbogenschweißgerät umfassend eine Schweißstromquelle, mittels derer ein Lichtbogen zwischen einer nicht abschmelzenden Elektrode und einem Werkstück erzeugbar ist, insbesondere zum WIG-und/oder Plasmaschweißen, und außerdem umfassend ein Vorschubteil zum definierten Zuführen von Schweißzusatzwerkstoff zum Werkstück, wobei dem Vorschubteil eine Vorschubsteuerung zum Steuern des Vorschubteiles zugeordnet ist.

Mittels der Schweißstromquelle kann zwischen einer nicht abschmelzenden Elektrode und einem zu schweißenden Werkstück ein Lichtbogen erzeugt werden. Der auf das Werkstück einwirkende Lichtbogen erzeugt ein Schmelzbad zum Verschweißen des Werkstückes. Ein Schweißzusatzwerkstoff, beispielsweise eine Stabelektrode oder ein Schweißdraht, kann dem Schmelzbad zugeführt werden. Die Zuführung erfolgt mittels eines Vorschubteiles. Das Vorschubteil wird von einer Vorschubsteuerung gesteuert, so dass der Schweißzusatzwerkstoff in Abhängigkeit vom Verlauf des Schweißprozesses, insbesondere in Abhängigkeit von der Schweißgeschwindigkeit und/oder der Qualität des Lichtbogens, selbsttätig zugeführt werden kann.

Die Schweißstromquelle stellt die erforderliche elektrische Energie für den Schweißprozess zur Verfügung und ist üblicherweise in Form einer handhabbaren Baueinheit ausgestaltet. Die Vorschubsteuerung bildet in Kombination mit dem Vorschubteil eine zweite Baueinheit aus. Zur Koordination der Schweißstromquelle mit der Vorschubsteuerung werden diese üblicherweise über externe Kabel miteinander elektrisch verbunden, und mittels entsprechender Stellglieder an der Schweißstromquelle und an der Vorschubsteuerung können die beiden Komponenten aufeinander abgestimmt werden.

Das Verbindungskabel zwischen der Schweißstromquelle und der Vorschubsteuerung kann die Funktionssicherheit des Lichtbogenschweißgerätes beeinträchtigen. So besteht beispielsweise die Gefahr, dass der Schweißer über das Verbindungskabel stolpert und die elektrische Verbindung unterbricht. Außerdem erfordert die Abstimmung bzw. das Justieren der Schweißstromquelle und der Vorschubsteuerung einen nicht zu unterschätzenden Zeitaufwand und stellt eine Gefahrenquelle dar, falls die Justierung vom Schweißer nicht sorgfältig durchgeführt wird.

Aufgabe der vorliegenden Erfindung ist es, ein Lichtbogenschweißgerät der eingangs genannten Art derart weiterzubilden, dass es eine einfachere Handhabung und eine verbesserte Funktionssicherheit aufweist.

Diese Aufgabe wird bei einem Lichtbogenschweißgerät der eingangs genannten Art erfindungsgemäß dadurch gelöst, dass die Schweißstromquelle zusammen mit dem Vorschubteil und/oder der Vorschubsteuerung an oder in einem gemeinsamen Tragteil gehalten ist.

Beim erfindungsgemäßen Lichtbogenschweißgerät bildet die Schweißstromquelle zusammen mit dem Vorschubteil und/oder der Vorschubsteuerung eine gemeinsame funktionelle Baueinheit. Diese ist vom Benutzer auf einfache Weise handhabbar, da die genannten Komponenten an einem gemeinsamen Tragteil gehalten sind. Eine derartige Ausgestaltung eignet sich insbesondere für den mobilen Einsatz des Lichtbogenschweißgerätes. Die Schweißstromquelle und die Vorschubsteuerung können herstellerseitig über eine feste Verdrahtung miteinander verbunden sein, so dass der Schweißer keine zusätzlichen elektrischen Verbindungskabel anschließen muss, um die elektrischen Komponenten des Lichtbogenschweißgerätes miteinander zu verbinden. Auch eine elektrische Justierung der Komponenten durch den Schweißer kann entfallen. Erforderliche Justierungen können herstellerseitig erfolgen. Durch die erfindungsgemäße Konstruktion lässt sich die Anzahl der Komponenten des Lichtbogenschweißgerätes, die vom Benutzer manuell aufeinander abgestimmt und/oder miteinander verbunden werden müssen, ganz erheblich reduzieren. Die Gefahr einer Fehlbedienung wird dadurch verringert und somit wird die Funktionssicherheit erhöht. Außerdem vereinfacht sich die Handhabung des Lichtbogenschweißgerätes.

Das erfindungsgemäße Lichtbogenschweißgerät kann insbesondere als WIG-Schweißgerät (Wolfram-Inert-Gas, im englischen Sprachraum Tungsten-Inert-Gas (TIG) genannt) oder in Form eines Plasmaschweißgerätes ausgestaltet sein.

Im Hinblick auf eine möglichst kompakte Ausgestaltung ist es von Vorteil, wenn ein Vorrat an Schweißzusatzwerkstoff am oder im gemeinsamen Tragteil gehalten ist.

Bevorzugt bildet die Schweißstromquelle zusammen mit dem Vorschubteil und der Vorschubsteuerung eine gemeinsame funktionelle Einheit, die an oder in einem Tragteil gehalten ist, wobei günstigerweise auch noch der Vorrat an Schweißzusatzwerkstoff am oder im Tragteil angeordnet ist.

Das Tragteil bildet bei einer vorteilhaften Ausgestaltung der Erfindung das Gehäuse des Lichtbogenschweißgerätes aus. Das Gehäuse bildet eine mechanische Halterung sowohl der Schweißstromquelle als auch des Vorschubteils und/oder der Vorschubsteuerung. Vorzugsweise ist auch der Vorrat an Schweißzusatzwerkstoff in das Gehäuse des Lichtbogenschweißgerätes integriert oder außenseitig am Gehäuse gehalten.

Eine weitere Vereinfachung der Handhabung des erfindungsgemäßen Lichtbogenschweißgerätes wird bei einer bevorzugten Ausführungsform dadurch erzielt, dass der Schweißstromquelle und der Vorschubsteuerung gemeinsam ein Anzeige- und Bedienfeld zugeordnet sind. Letzteres ist bevorzugt am oder im gemeinsamen Tragteil gehalten. Der Benutzer kann Schweißprozessparameter am Anzeige- und Bedienfeld einstellen und ablesen, wobei das Anzeige- und Bedienfeld sowohl der Schweißstromquelle als auch der Vorschubsteuerung zugeordnet ist. Somit ist das Lichtbogenschweißgerät sehr übersichtlich ausgestaltet und kann vom Benutzer auf einfache Weise bedient werden.

Von besonderem Vorteil ist es, wenn das Lichtbogenschweißgerät eine zentrale Steuereinrichtung aufweist, die am oder im gemeinsamen Tragteil gehalten und mit der Schweißstromquelle und der Vorschubsteuerung elektrisch verbunden ist. Die zentrale Steuereinrichtung steuert den Schweißprozess, wobei zum Beispiel die Qualität des Lichtbogens zwischen der nicht abschmelzenden Elektrode und dem Werkstück und auch die Vorschubbewegung des Schweißzusatzwerkstoffes von der zentralen Steuereinrichtung vorgegeben werden können. Diese ist ebenso wie die Schweißstromquelle und die Vorschubsteuerung am oder im zentralen Tragteil gehalten, insbesondere kann vorgesehen sein, dass die zentrale Steuereinrichtung in das Gehäuse des Lichtbogenschweißgerätes integriert ist.

Günstig ist es, wenn das Lichtbogenschweißgerät eine am oder im gemeinsamen Tragteil gehaltene Positioniersteuerung zur Steuerung einer Werkstückpositioniereinrichtung und/oder einer Schweißkopfpositionseinrichtung aufweist. Mittels der Werkstückpositioniereinrichtung kann das Werkstück relativ zur nicht abschmelzenden Elektrode während des Schweißprozesses bewegt werden. Die entsprechenden Steuersignale erhält die Werkstückpositioniervorrichtung von der Positioniersteuerung des Lichtbogenschweißgerätes. Die Werkstückpositioniereinrichtung kann beispielsweise in Form eines Drehtisches ausgestaltet sein, auf dem das zu schweißende Werkstück positioniert werden kann und der während des Schweißprozesses in Drehung versetzt werden kann. Mittels der Schweißkopfpositioniereinrichtung kann ein Schweißkopf des Lichtbogenschweißgerätes während des Schweißprozesses relativ zum Werkstück bewegt werden. Der Schweißkopf kann einen Schweißbrenner aufweisen und/oder eine Positioniereinheit zur Positionierung des Schweißzusatzwerkstoffes am Werkstück. Durch die Anordnung der Positioniersteuerung am oder im gemeinsamen Tragteil des Lichtbogenschweißgerätes bildet auch die Positioniersteuerung eine Gerätekomponente, die zusammen mit der Schweißstromquelle und dem Vorschubteil und/oder der Vorschubsteuerung eine einzige handhabbare Baueinheit ausbildet.

Von besonderem Vorteil ist es, wenn als Schweißzusatzwerkstoff ein Schweißdraht zum Einsatz kommt und das Lichtbogenschweißgerät eine am oder im gemeinsamen Tragteil gehaltene steuerbare Heizstromquelle aufweist zum Erwärmen des dem Werkstück zugewandten freien Endes des Schweißdrahtes.

Der dem Lichtbogen zugeführte Schweißdraht wird vom Lichtbogen erwärmt. Dies hat zur Folge, dass dem Lichtbogen Energie entzogen wird und dadurch der Schweißprozess beeinflusst wird. Um den Einfluss des Schweißdrahtes auf die Energiebilanz des Lichtbogens möglichst gering und möglichst konstant zu halten, und zwar selbst dann, wenn die pro Zeiteinheit zugeführte Drahtmenge sich ändert, ist es von Vorteil, wenn der freie Endbereich des Schweißdrahtes vor seiner Zuführung zum Lichtbogen beispielsweise durch Widerstandserwärmung erwärmt wird. Das freie Ende des Schweißdrahtes wird hierbei auf eine hohe Temperatur erwärmt, jedoch ohne dass sich ein Lichtbogen zwischen Schweißdraht und Werkstück ausbildet und ohne dass der Schweißdraht bereits schmilzt. Wird der stark erwärmte Schweißdraht dem Lichtbogen zugeführt, so wird dem Lichtbogen nur sehr wenig Wärme durch den Schweißdraht entzogen und dadurch wird der Einfluss des Schweißdrahtes auf die Qualität des Lichtbogens verringert.

Zum Erwärmen des freien Endes des Schweißdrahtes kommt eine Heizstromquelle zum Einsatz, die beispielsweise als Konstantstromquelle ausgestaltet sein kann. Die Heizstromquelle weist nur eine geringe Arbeitsspannung auf, so dass sich vom freien Ende des Schweißdrahtes zum Werkstück kein Lichtbogen ausbilden kann.

Gemäß einer vorteilhaften Ausführungsform der Erfindung bildet die Heizstromquelle zusammen mit der Schweißstromquelle, dem Vorschubteil und/oder der Vorschubsteuerung und vorzugsweise zusammen mit dem Schweißdrahtvorrat eine gemeinsam handhabbare funktionelle Baueinheit, wobei sämtliche Komponenten am oder im gemeinsamen Tragteil, vorzugsweise in einem Gehäuse des Lichtbogenschweißgerätes, gehalten sind. Es ist somit von Vorteil, wenn auch die Heizstromquelle in das Gehäuse des Lichtbogenschweißgerätes integriert ist.

Dem vorzugsweise zum Einsatz kommenden gemeinsamen Anzeige- und Bedienfeld sind bevorzugt auch die zentrale Steuereinrichtung, die Positioniersteuerung und/oder die Heizstromquelle zugeordnet. Die zentrale Steuereinrichtung, die Positioniersteuerung und die Heizstromquelle bilden jeweils eine Gerätekomponente des Lichtbogenschweißgerätes aus. Diesen Gerätekomponenten kann das gemeinsame Anzeige- und Bedienfeld zugeordnet sein, das ebenso wie die genannten Gerätekomponenten am oder im gemeinsamen Tragteil gehalten sein kann, um insgesamt ein Lichtbogenschweißgerät in Form einer einfach handhabbaren funktionellen Baueinheit auszubilden.

Von Vorteil ist es, wenn die Positioniersteuerung und/oder die Heizstromquelle ebenso wie die Schweißstromquelle und die Vorschubsteuerung mit der zentralen Steuereinrichtung elektrisch verbunden sind. Dies gibt die Möglichkeit, mittels der zentralen Steuereinrichtung auch die Positionierung des Werkstückes und/oder des Schweißkopfes sowie die Aufheizung des freien Endes des Schweißdrahtes während des Schweißprozesses auf einfache Weise zu steuern.

Bei einer besonders bevorzugten Ausgestaltung weist die zentrale Steuereinrichtung mindestens ein zentrales Speicherglied auf, in dem werkstückspezifische Prozessparameter der Schweißstromquelle, der Vorschubsteuerung, der Positioniersteuerung und/oder der Heizstromquelle speicherbar und bei Bedarf vom Benutzer abrufbar sind. Das mindestens eine zentrale Speicherglied gibt die Möglichkeit, Prozessparameter des Schweißprozesses werkzeugspezifisch abzuspeichern. Sollen mehrere identische Werkstücke geschweißt werden, so können beim Schweißen eines ersten Werkstückes die optimalen Schweißparameter in einem zentralen Speicherglied gespeichert und zum Schweißen weiterer identischer Werkstücke vom Benutzer abgerufen werden. So kann für Schweißverfahren, bei denen ein Lichtbogen zwischen einer nicht abschmelzenden Elektrode und einem Werkstück erzeugt wird, eine beträchtliche Vereinfachung erzielt werden. Insbesondere besteht die Möglichkeit, dass technisch vorgebildetes Personal die zum Schweißen eines Werkstückes optimalen Parameter in einem zentralen Speicherglied speichert und dass anschließend weitere, identisch ausgestaltete Werkstücke von technisch weniger vorgebildetem Personal geschweißt werden mittels der gespeicherten Parameter.

Die zentrale Steuereinrichtung kann eine Informationsverarbeitungsinstanz ausbilden, welche sternförmig Verbindungen unterhält zum gemeinsamen Anzeige- und Bedienfeld sowie zur Vorschubsteuerung, zur Schweißstromquelle, zur Heizstromquelle und zur Positioniersteuerung. Mittels der zentralen Steuereinrichtung können alle diese Gerätekomponenten auf einfache Weise aufeinander abgestimmt und gesteuert werden, wobei die Gerätekomponenten zusammen mit der zentralen Steuereinheit im Gehäuse des Lichtbogenschweißgerätes integriert sind und eine einzige Baueinheit ausbilden.

Bei einer besonders bevorzugten Ausführungsform weist das Lichtbogenschweißgerät ein BUS-System auf, an dem die Schweißstromquelle, die Vorschubsteuerung, das gemeinsame Anzeige- und Bedienfeld, die zentrale Steuereinrichtung, die Positioniersteuerung und/oder die Heizstromquelle angeschlossen sind. Die Bereitstellung eines BUS-Systems, beispielsweise eines CAN-Busses, erleichtert die Steuerung des Lichtbogenschweißgerätes und vereinfacht dessen Aufbau.

Das gemeinsame Anzeige- und Bedienfeld weist bei einer bevorzugten Ausgestaltung einen berührungsempfindlichen Bildschirm (Touchscreen) auf. Dadurch kann die Handhabung des Lichtbogenschweißgerätes zusätzlich vereinfacht werden.

Es kann vorgesehen sein, dass der nicht abschmelzenden Elektrode während des Schweißprozesses ein Gas zuführbar ist, so dass der Lichtbogen zwischen der nicht abschmelzenden Elektrode und dem Werkstück in einer speziellen Gasatmosphäre brennt. Es kann beispielsweise ein Schutzgas, insbesondere Argon zum Einsatz kommen oder etwa auch ein Formiergas in Form eines Gemisches insbesondere aus Stickstoff und Wasserstoff. Die Zuführung des Gases während des Schweißprozesses kann mittels eines Strömungsreglers reguliert werden, der von einer Gassteuereinrichtung des Lichtbogenschweißgerätes steuerbar ist. Die Gassteuereinrichtung kann ebenfalls am oder im gemeinsamen Tragteil gehalten sein.

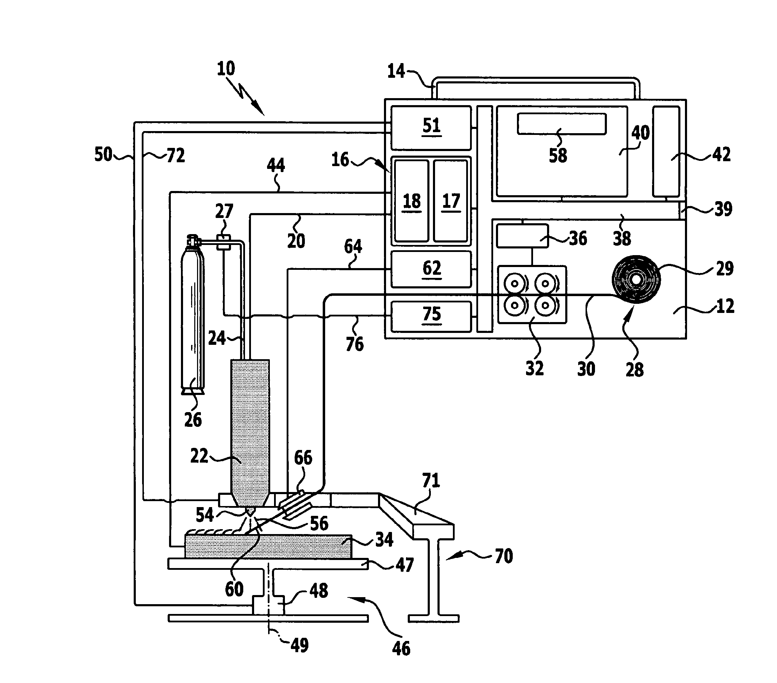

Die nachfolgende Beschreibung einer bevorzugten Ausführungsform der Erfindung dient im Zusammenhang mit der Zeichnung der näheren Erläuterung.

Die einzige Figur der Zeichnung zeigt schematisch ein erfindungsgemäßes Lichtbogenschweißgerät, an das ein Schweißbrenner und ein Schutzgasvorrat sowie ein Werkstück und eine Werkstückpositioniereinrichtung angeschlossen sind.

Das erfindungsgemäße Lichtbogenschweißgerät 10 bildet eine einzige funktionelle Baueinheit aus, die in der dargestellten Ausführungsform tragbar ausgestaltet ist. Hierzu weist das Lichtbogenschweißgerät 10 ein Gehäuse 12 auf, an dem oberseitig ein Traggriff 14 festgelegt ist. Das Gehäuse 12 bildet ein Tragteil aus, in dem die nachfolgend im Einzelnen beschriebenen Gerätekomponenten des Lichtbogenschweißgerätes 10 gehalten sind.

Eine erste Gerätekomponente des Lichtbogenschweißgerätes 10 stellt eine Schweißstromquelle 16 dar mit einem Steuerteil 17 und einem Leistungsteil 18. An das Leistungsteil 18 ist über eine Schweißstromleitung 20 ein Schweißbrenner 22 angeschlossen. Über eine Gasleitung 24 kann dem Schweißbrenner 22 zusätzlich ein Schutzgas, beispielsweise Argon, aus einem Gasvorrat 26 zugeführt werden. In die Gasleitung 24 ist ein steuerbarer Strömungsregler 27 geschaltet.

Eine zweite Gerätekomponente, die ebenso wie die Schweißstromquelle 16 in das Gehäuse 12 des Lichtbogenschweißgerätes 10 integriert ist, wird von einem Vorrat an Schweißzusatzwerkstoff gebildet, der im vorliegenden Ausführungsbeispiel als Schweißdrahtvorrat 28 ausgestaltet ist. Der Schweißdrahtvorrat 28 kann in Form einer Vorratstrommel 29 für Schweißdraht 30 ausgebildet sein. Letzterer kann mittels eines Vorschubteiles 32 aus dem Gehäuse 12 herausgeführt und einem zu schweißenden Werkstück 34 zugeführt werden. Das Vorschubteil 32 bildet eine dritte Gerätekomponente des Lichtbogenschweißgerätes 10, die in das Gehäuse 12 integriert und an diesem gehalten ist.

Alternativ zur Integration des Schweißdrahtvorrates 28 in das Gehäuse 12 kann der Schweißdrahtvorrat 28 auch außenseitig am Gehäuse 12 montiert sein, wobei der Schweißdraht 30 durch das Gehäuse 12 und das Vorschubteil 32 hindurch geführt wird. Auch eine Anordnung des Schweißdrahtvorrats 28 getrennt vom Gehäuse 12 ist möglich, wobei der Schweißdraht 30 ausgehend von der Vorratsrolle 29 durch das Gehäuse 12 und das Vorschubteil 32 hindurch geführt wird, so dass er vom Vorschubteil 32 in vorgegebener Weise dem Werkstück 34 zugeführt werden kann.

Das Vorschubteil 32 wird von einer Vorschubsteuerung 36 gesteuert, die eine vierte Gerätekomponente des erfindungsgemäßen Lichtbogenschweißgerätes 10 ausbildet und ebenfalls in das Gehäuse 12 integriert ist.

Die Schweißstromquelle 16 und die Vorschubsteuerung 36 sind über ein BUS-System 38 an eine zentrale Steuereinrichtung 40 angeschlossen, die eine weitere Gerätekomponente des erfindungsgemäßen Lichtbogenschweißgerätes 10 ausbildet und in das Gehäuse 12 integriert ist. Das BUS-System weist eine Schnittstelle 39 auf, über die die zentrale Steuereinrichtung 40 mit einer externen Steuervorrichtung (in der Zeichnung nicht dargestellt) verbunden werden kann. Dies ermöglicht eine externe Überwachung und Protokollierung sowie eine Integration in übergeordnete Automatisierungskonzepte. Die Schnittstelle 39 kann in Form einer Funkschnittstelle ausgestaltet sein oder den Anschluss eines Funkmoduls ermöglichen, so dass das Lichtbogenschweißgerät über eine Funkverbindung mit einer externen Steuervorrichtung verbunden werden kann.

Über das BUS-System 38 ist die zentrale Steuereinrichtung 40 mit einem zentralen Anzeige- und Bedienfeld 42 verbunden. Dieses bildet ebenfalls eine in das Gehäuse 12 integrierte Gerätekomponente des Lichtbogenschweißgerätes 10 aus.

Zum Schweißen des Werkstückes 34 kann dieses über eine Masseleitung 44 an das Leistungsteil 18 der Schweißstromquelle 16 angeschlossen werden. Das Werkstück 34 kann auf einer Werkstückpositioniereinrichtung 46 positioniert werden, die im dargestellten Ausführungsbeispiel in Form eines Drehtisches 47 ausgestaltet ist, der mittels einer steuerbaren Antriebseinheit 48 um eine vertikale Drehachse 49 rotierbar ist. Zur Steuerung der Werkstückpositioniereinrichtung 46 weist das Lichtbogenschweißgerät 10 eine Gerätekomponente in Form einer Positioniersteuerung 51 auf, die in das Gehäuse 12 integriert und über das BUS-System 38 mit der zentralen Steuereinrichtung 40 verbunden ist. Über eine erste Steuerleitung 50 ist die Positioniersteuerung 51 mit der Antriebseinheit 48 der Werkstückpositioniereinrichtung 46 verbunden.

Die Ausrichtung des Schweißbrenners 22 relativ zum Werkstück 34 kann auch mittels einer Schweißkopfpositioniereinrichtung 70 erfolgen, die vorliegend in Form eines Roboterarms 71 ausgestaltet ist, der um mehrere Achsen drehbar und entlang mehrerer Achsen verschiebbar ist. Derartige Roboterarme 71 sind dem Fachmann an sich bekannt. Die Steuerung der Schweißkopfpositioniereinrichtung 70 erfolgt ebenfalls mittels der in das Gehäuse 12 integrierten Positioniersteuerung 51. Diese ist über eine zweite Steuerleitung 72 mit der Schweißkopfpositioniereinrichtung 70 verbunden.

Der Schweißbrenner 22 weist eine nicht abschmelzende Elektrode 54 auf. Zwischen der Elektrode 54 und dem Werkstück 34 kann mittels der Schweißstromquelle 16 ein Lichtbogen 56 erzeugt werden. Gleichzeitig kann der Elektrode 54 über die Gasleitung 24 ein Schutzgas geregelt zugeführt werden, so dass der Lichtbogen 56 in einer Schutzgasatmosphäre brennt. Das Beaufschlagen des Werkstückes 34 mit dem Lichtbogen 56 hat zur Folge, dass sich auf dem Werkstück 34 ein Schmelzbad ausbildet. Dem Schmelzbad kann mittels des von der Vorschubsteuerung 36 gesteuerten Vorschubteiles 32 des Lichtbogenschweißgerätes 10 Schweißdraht 30 zugeführt werden in Abhängigkeit von Steuersignalen, die die Vorschubsteuerung 36 von der zentralen Steuereinrichtung 40 erhält, die auch die Schweißstromquelle 16 steuert.

Die Regelung des Gasstroms erfolgt mittels des Strömungsreglers 27, der in die Gasleitung 24 geschaltet ist und von einer in das Gehäuse 12 integrierten Gassteuerung 75 gesteuert wird. Die Gassteuerung 75 bildet eine weitere Gerätekomponente des Lichtbogenschweißgeräts, die zur Erzielung einer kompakten Bauweise in das Gehäuse 12 eingebaut ist. Über eine Steuerleitung 76 ist die Gassteuerung 75 mit dem Strömungsregler 27 verbunden. Die Gassteuerung 75 ist an das BUS-System 38 angeschlossen und steht damit mit der zentralen Steuereinrichtung 40 in elektrischer Verbindung.

Mittels des Schweißgerätes 10 können unterschiedliche Werkstücke geschweißt werden. Die zum Schweißen des jeweiligen Werkstückes zum Einsatz kommenden Prozessparameter, also beispielsweise der Schweißstrom, die Schweißspannung, die Vorschubgeschwindigkeit des Schweißdrahtes 30, die Bewegungsdaten der Werkstückpositioniereinrichtung 46 und der Schweißkopfpositioniereinrichtung 70 können werkstückspezifisch in einem zentralen Speicherglied 58 der zentralen Steuereinrichtung 40 gespeichert und bei Bedarf vom Benutzer über das Anzeige- und Bedienfeld 42 abgerufen werden.

Um zu vermeiden, dass dem Lichtbogen 56 während des Schweißverfahrens ungewollt Energie durch die Zuführung des Schweißdrahtes 30 entzogen wird, kann das freie Ende 60 des Schweißdrahtes 30 mit Hilfe einer Heizstromquelle 62 durch Widerstandserwärmung vorgeheizt werden, bevor es in den Bereich des Lichtbogens 56 eintritt. Die Heizstromquelle 62 stellt eine weitere Gerätekomponente des Lichtbogenschweißgerätes 10 dar und ist in das Gehäuse 12 integriert. Auch die Heizstromquelle 62 ist an das BUS-System 38 angeschlossen und kann somit von der zentralen Steuereinrichtung 40 gesteuert werden. Über eine Heizleitung 64 ist die Heizstromquelle 62 mit einer Drahthalteeinrichtung 66 verbunden, die an der Schweißkopfpositioniereinrichtung 70 festgelegt ist. Über die Drahthalteeinrichtung kann das freie Ende 60 des Schweißdrahtes 30 mit einer Heizspannung beaufschlagt werden, so dass ausgehend von der Heizstromquelle 62 über die Heizleitung 64 und das freie Ende 60 des Schweißdrahtes 30 eine elektrische Verbindung zum Werkstück 34 hergestellt wird. Der über das freie Ende 60 fließende Heizstrom erhitzt das freie Ende 60 auf eine Temperatur unterhalb des Schmelzpunktes des Schweißdrahtes 30, so dass dieser dem Lichtbogen 56 praktisch keine Energie mehr entzieht und folglich die der nicht abschmelzenden Elektrode 54 von der Schweißstromquelle 16 bereitgestellte elektrische Energie praktisch ungeändert zum Schweißen des Werkstückes 34 zur Verfügung steht.

Wird das freie Ende 60 nicht mit der Heizstromquelle 62 vorgeheizt, so wird dem Lichtbogen 56 durch das Zuführen des kalten Schweißdrahtes Energie entzogen. Der Energieentzug kann durch die Zuführung zusätzlicher elektrischer Energie von der Schweißstromquelle 16 kompensiert werden. Dies hat aber zur Folge, dass insgesamt das Werkstück 34 mit zusätzlicher Wärme beaufschlagt wird. Das Vorheizen des freien Endes 60 ermöglicht es somit, die Wärmebelastung des Werkstückes 34 zu reduzieren.

Das erfindungsgemäße Schweißgerät 10 zeichnet sich durch eine einfache Handhabung aus und durch eine hohe Funktionssicherheit. Dies wird insbesondere dadurch erzielt, dass zusätzlich zur Schweißstromquelle 16 auch die Vorschubsteuerung 36, das Vorschubteil 32, die Positioniersteuerung 51, die Gassteuerung 75, die Heizstromquelle 62 und auch der Schweißdrahtvorrat 28 in das Gehäuse 12 integriert sind. Die Schweißstromquelle 16 stellt die zur Ausbildung eines Lichtbogens zwischen der nicht abschmelzenden Elektrode 54 und dem Werkstück 34 erforderliche Schweißenergie zur Verfügung und die über das BUS-System 38 mit der Schweißstromquelle 16 und der zentralen Steuereinrichtung 40 verbundene Vorschubsteuerung 36 stellt in Kombination mit dem Vorschubteil 32 und dem Schweißdrahtvorrat 28 sicher, dass dem Lichtbogen mittels der Heizstromquelle 62 vorgeheizter Schweißdraht in Abhängigkeit von werkstückspezifischen Prozessdaten zugeführt werden kann.

## Patentansprüche

1. Lichtbogenschweißgerät umfassend eine Schweißstromquelle, mittels derer ein Lichtbogen zwischen einer nicht abschmelzenden Elektrode und einem Werkstück erzeugbar ist, insbesondere zum WIG- und/oder Plasmaschweißen, und außerdem umfassend ein Vorschubteil zum definierten Zuführen von Schweißzusatzwerkstoff zum Werkstück, wobei dem Vorschubteil eine Vorschubsteuerung zum Steuern des Vorschubteiles zugeordnet ist, **dadurch gekennzeichnet, dass** die Schweißstromquelle (16) zusammen mit dem Vorschubteil (32) und/oder der Vorschubsteuerung (36) an oder in einem gemeinsamen Tragteil (12) gehalten sind.

2. Lichtbogenschweißgerät nach Anspruch 1, **dadurch gekennzeichnet, dass** das Lichtbogenschweißgerät einen Vorrat (28) an Schweißzusatzwerkstoff aufweist, wobei der Vorrat (28) am oder im gemeinsamen Tragteil (12) gehalten ist.

3. Lichtbogenschweißgerät nach Anspruch 1 oder 2, **dadurch gekennzeichnet, dass** das Tragteil das Gehäuse (12) des Lichtbogenschweißgerätes (10) ausbildet.

4. Lichtbogenschweißgerät nach Anspruch 1, 2 oder 3, **dadurch gekennzeichnet, dass** der Schweißstromquelle (16) und der Vorschubsteuerung (36) ein gemeinsames Anzeige- und Bedienfeld (42) zugeordnet ist.

5. Lichtbogenschweißgerät nach Anspruch 4, **dadurch gekennzeichnet, dass** das Anzeige- und Bedienfeld (42) am oder im gemeinsamen Tragteil (12) gehalten ist.

6. Lichtbogenschweißgerät nach einem der voranstehenden Ansprüche, **dadurch gekennzeichnet, dass** das Lichtbogenschweißgerät (10) eine zentrale Steuereinrichtung (40) aufweist, die am oder im gemeinsamen Tragteil (12) gehalten und mit der Schweißstromquelle (16) und der Vorschubsteuerung (36) elektrisch verbunden ist.

7. Lichtbogenschweißgerät nach einem der voranstehenden Ansprüche, **dadurch gekennzeichnet, dass** das Lichtbogenschweißgerät (10) eine am oder im gemeinsamen Tragteil (12) gehaltene Positioniersteuerung (51) zur Steuerung einer Werkstückpositioniereinrichtung (46) und/oder einer Schweißkopfpositioniereinrichtung (70) aufweist.

8. Lichtbogenschweißgerät nach einem der voranstehenden Ansprüche, **dadurch gekennzeichnet, dass** der Schweißzusatzwerkstoff einen Schweißdraht (30) umfasst und dass das Lichtbogenschweißgerät (10) eine am oder im gemeinsamen Tragteil (12) gehaltene steuerbare Heizstromquelle (62) aufweist zum Erwärmen des dem Werkstück (34) zugewandten freien Endes (60) des Schweißdrahtes (30).

9. Lichtbogenschweißgerät nach Anspruch 6, 7 oder 8, **dadurch gekennzeichnet, dass** der zentralen Steuereinrichtung (40), der Positioniersteuerung (51) und/oder der Heizstromquelle (62) ein gemeinsames Anzeige- und Bedienfeld (42) zugeordnet ist.

10. Lichtbogenschweißgerät nach Anspruch 9, **dadurch gekennzeichnet, dass** das gemeinsame Anzeige- und Bedienfeld am oder im gemeinsamen Tragteil (12) gehalten ist.

11. Lichtbogenschweißgerät nach einem der Ansprüche 6 bis 10, **dadurch gekennzeichnet, dass** die Positioniersteuerung (56) und/oder die Heizstromquelle (62) mit der zentralen Steuereinrichtung (40) elektrisch verbunden sind.

12. Lichtbogenschweißgerät nach einem der Ansprüche 6 bis 11, **dadurch gekennzeichnet, dass** die zentrale Steuereinrichtung (40) mindestens ein zentrales Speicherglied (58) aufweist, in dem werkstückspezifische Prozessparameter der Schweißstromquelle (16), der Vorschubsteuerung (36), der Positioniersteuerung (51) und/oder der Heizstromquelle (62) speicherbar und aus dem diese Parameter bei Bedarf vom Benutzer abrufbar sind.

13. Lichtbogenschweißgerät nach einem der voranstehenden Ansprüche, **dadurch gekennzeichnet, dass** das Lichtbogenschweißgerät (10) ein BUS-System (38) umfasst, an das die Schweißstromquelle (16), die Vorschubsteuerung (36), das zentrale Anzeige- und Bedienfeld (42), die zentrale Steuereinrichtung (40), die Positioniersteuerung (51) und/oder die Heizstromquelle (62) angeschlossen sind.

14. Lichtbogenschweißgerät nach einem der voranstehenden Ansprüche, **dadurch gekennzeichnet, dass** das Lichtbogenschweißgerät (10) tragbar ausgestaltet ist.
